# EUROPÄISCHE PATENTSCHRIFT

(11) **EP 1 627 755 B1**
(45) Veröffentlichungstag und Bekanntmachung des Hinweises auf die Patenterteilung: **05.01.2011**
(21) Anmeldenummer: 05017253.5
(22) Anmeldetag: 09.08.2005
(51) Int. Cl.: B60G 15/06

(54) **Lagerung für einen Schwingungsdämpfer**
Mounting for a vibration damper
Support pour un amortisseur de vibrations

(30) Priorität: 17.08.2004 DE 102004039734
(43) Veröffentlichungstag der Anmeldung: 22.02.2006
(73) Patentinhaber: ZF Friedrichshafen AG, 88046 Friedrichshafen (DE); Ford-Werke GmbH, 50735 Köln (DE)
(72) Erfinder: Handke, Günther, 97502 Euerbach (DE); Schulz, Markus, 42855 Remscheid (DE)

(56) Entgegenhaltungen:
- DE-A1- 3 716 099
- DE-C1- 10 051 769
- US-A- 4 958 849
- PATENT ABSTRACTS OF JAPAN Bd. 2002, Nr. 05, 3. Mai 2002 (2002-05-03) -& JP 2002 019440 A (PIOLAX INC; NISSAN MOTOR CO LTD), 23. Januar 2002 (2002-01-23)
- PATENT ABSTRACTS OF JAPAN Bd. 012, Nr. 360 (M-746), 27. September 1988 (1988-09-27) & JP 63 116916 A (HONDA MOTOR CO LTD), 21. Mai 1988 (1988-05-21)
- PATENT ABSTRACTS OF JAPAN Bd. 014, Nr. 495 (M-1041), 29. Oktober 1990 (1990-10-29) -& JP 02 204113 A (MAZDA MOTOR CORP), 14. August 1990 (1990-08-14)

## Beschreibung

Die Erfindung betrifft eine Lagerung für einen Schwingungsdämpfer gemäß dem Oberbegriff von Patentanspruch 1.

Aus der gattungsbildenden DE 100 51 769 C1 ist eine Lagerung für einen Schwingungsdämpfer bekannt, umfassend mindestens eine Verdrehfläche, die mit einer fahrzeugseitigen Gegenfläche zumindest während des Montageablaufs des Schwingungsdämpfers in einer Aufnahmeöffnung des Fahrzeugs in Wirkverbindung steht, wobei die mindestens eine Verdrehfläche und die Gegenfläche lagerseitige Verbindungsmittel zu fahrzeugseitigen Verbindungsmitteln rotatorisch ausrichtet, wobei die Lagerung eine Lagerkappe aufweist, die die mindestens eine Verdrehfläche aufweist und die Lagerkappe drehmomentübertragend in Wirkverbindung mit der gesamten Lagerung steht.

Der große Vorteil einer derartigen Lagerkappe besteht darin, dass der Schwingungsdämpfer bezogen auf die Ausrichtung in Umfangsrichtung bei der Montage relativ ungenau in die Montagestelle eingeführt werden kann. Die exakte Positionierung übernimmt die Lagerkappe. Noch deutlicher wird der Vorteil der Kappe im Reparaturfall in einer Werkstatt. Dort stehen keine Montageroboter zur Verfügung, sondern der Monteur müsste per Augenschein die korrekte Position finden.

Sofern der Bauraum im Fahrzeug vorhanden ist, kann die Montagehilfe auch als Abdeckung der Kolbenstange verwendet werden.

Wenn der Schwingungsdämpfer von dem Monteur oder mittels einer Vorrichtung in den Radkasten eingeführt wird, müssen sofort die Befestigungsschrauben zwischen der Lagerung und dem Fahrzeugaufbau montiert werden. Bei der Fahrzeugneumontage tritt das Problem auf, dass die Zuführbewegung des Schwingungsdämpfers einerseits von der Unterseite des Fahrzeugs erfolgen muss, andererseits ein Monteur von der Oberseite die Befestigungsmittel, in der Regel, Gewindemuttern, montiert. Für die Auslegung eines Montagebands sind diese Montageabläufe hinderlich.

Bei der Handmontage im Reparaturfall ist es u. U. notwendig, dass ein Monteur den Schwingungsdämpfer in den Radkasten einführt und hält, während ein zweiter Monteur dann die Befestigungsmittel montiert.

Aufgabe der vorliegenden Erfindung ist es, eine Lagerung für einen Schwingungsdämpfer zu realisieren, die das aus dem Stand der Technik bekannte Problem des Montageaufwands minimiert.

Erfindungsgemäß wird die Aufgabe dadurch gelöst, dass die Lagerung Haltemittel aufweist, die den Schwingungsdämpfer unabhängig von den Verbindungsmitteln gegen Herausfallen aus dem Fahrzeug sichern.

Der große Vorteil besteht darin, dass nun der Schwingungsdämpfer in eine Montagezwischenstellung gebracht werden kann, in der die Verbindungsmittel noch nicht montiert sind, jedoch der Schwingungsdämpfer nicht herausfallen kann. Damit kann auch ein Monteur alleine ohne besondere Vorrichtungen die Montage des Schwingungsdämpfers vornehmen. Für die Großserie kann mit der Montagezwischenstellung eine zeitliche Trennung der Montage der Schwingungsdämpfer von der Montage der Verbindungsmittel erreicht werden. Solange z. B. Arbeiten an der Unterseite des Fahrzeugs vorgenommen werden, hängen die Schwingungsdämpfer in ihrer Montagezwischenstellung. Sobald z. B. im Motor- oder im Kofferraum Arbeiten verrichtet werden und das Montageband auf einer niedrigeren Arbeitshöhe bewegt wird, kann man die Verbindungsmittel montieren. Dadurch ergibt sich insgesamt eine günstigere Montagelinie.

Es ist vorgesehen, dass die Haltemittel von Halteflächen gebildet werden, die sich fahrzeugseitig abstützen.

Dabei werden die Haltemittel von mindestens einer elastischen Zunge bereitgestellt, die bei der Montage durch eine fahrzeugseitige Aufnahmeöffnung geführt wird und sich nach der Montage radial entspannen kann. Generell können die Haltemittel auch kraftschlüssig arbeiten, doch bieten formschlüssige Haltemittel dieser Bauart den Vorteil, dass sie für die Montage schmutzunempfindlicher sind.

Bei einer ersten Lösungsvariante werden die Haltemittel von der Lagerkappe gebildet und die Lagerkappe ist in Richtung der Längsachse des Schwingungsdämpfers mit diesem fixiert.

Die Fixierung der Lagerkappe mit dem Schwingungsdämpfer erfolgt über mindestens eine Formschlussverbindung. Damit verklammert die Lagerkappe den Schwingungsdämpfer mit dem Fahrzeug.

In weiterer konstruktiver Ausgestaltung wird die Formschlussverbindung von mindestens einem Schnapphaken gebildet, der in einen Träger der schwingungsdämpferseitigen Lagerung eingreift.

Um größere konstruktive Gestaltungsfreiheiten zu erreichen, ist die Formschlussverbindung unabhängig von der Verdrehsicherung der Lagerkappe zur schwingungsdämpferseitigen Lagerung ausgeführt.

Gemäß einem vorteilhaften Unteranspruch ist die mindestens eine elastische Zunge im Bereich der Verdrehfläche angeordnet.

Vielfach ist es erforderlich, dass der Schwingungsdämpfer in Umfangsrichtung lageorientiert eingebaut werden muss. Deshalb ist vorgesehen, dass die Lagerkappe hinsichtlich ihrer Anordnung der Verdrehflächen maximal eine Symmetrieachse aufweist.

Deshalb weisen die Hauptachsen der Lagerkappe eine unterschiedliche Länge auf.

In weiterer vorteilhafter Ausgestaltung ist der Träger der schwingungsdämpferseitigen Lagerung mit einer Kröpfung versehen, die die Bauhöhe der Schnapphaken aufnimmt.

Die fahrzeugseitige Lagerung kann eine topfförmige Aufnahme für die Kröpfung der schwingungsdämpferseitigen Lagerung aufweisen, so dass in der Montagezwischenstellung Querbelastungen formschlüssig von der Kröpfung in Verbindung mit der topfförmigen Aufnahme unabhängig von den Haltemitteln abgestützt werden können.

Anhand der folgenden Figurenbeschreibung soll die Erfindung näher erläutert werden.

Es zeigt:
- Fig. 1 und 2: Schwingungsdämpferseitige Lagerung
- Fig. 3a - 3d: Lagerkappe als Einzelteil
- Fig. 4: Schwingungsdämpferseitige Lagerung ohne Kappe in der Draufsicht
- Fig. 5: Draufsicht auf einen Fahrzeugausschnitt im Bereich der Lagerung
- Fig. 6: Schnittdarstellung durch die Lagerung
- Fig. 7: Perspektivische Darstellung zur Fig. 6
- Fig. 8: Draufsicht zur Fig. 6

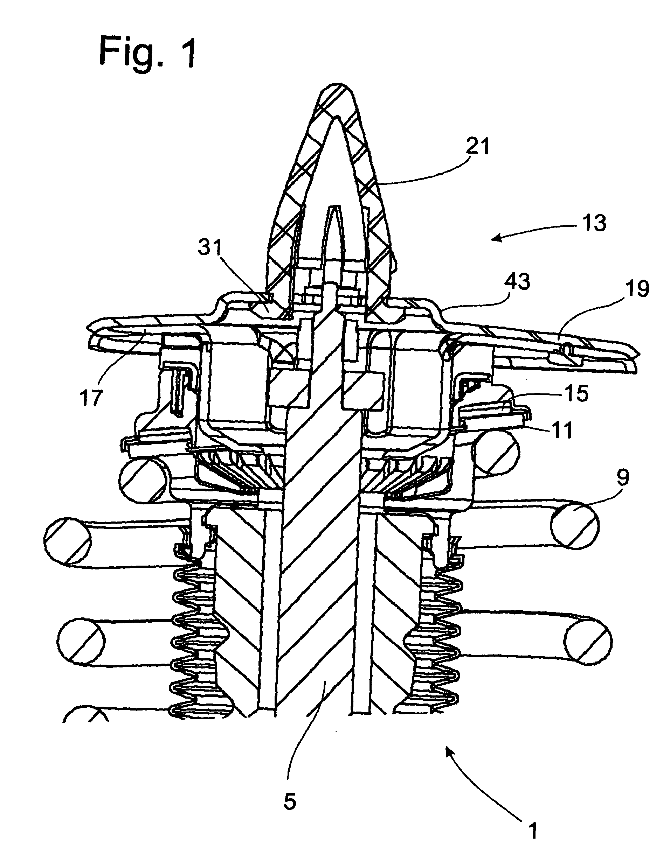

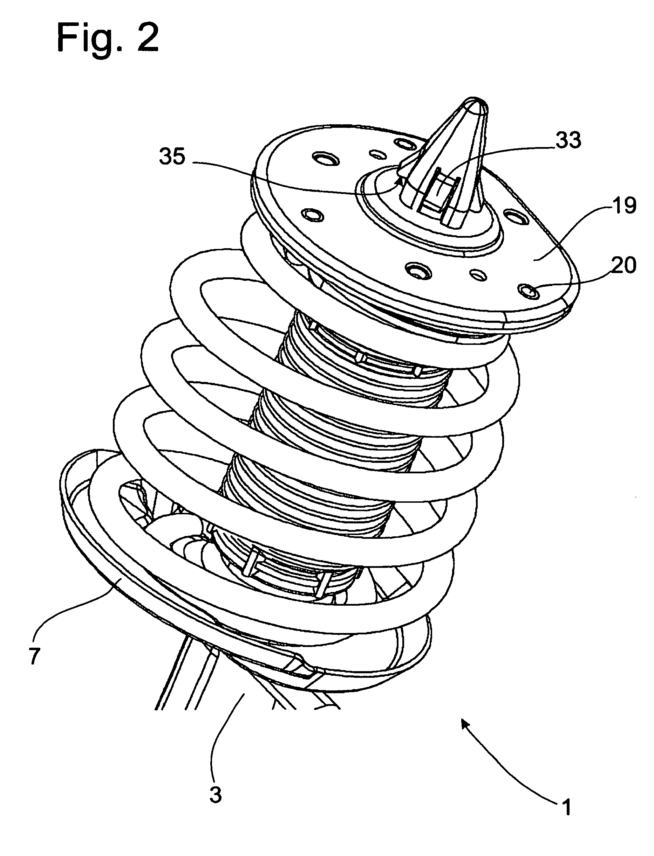

Die Figuren 1 und 2 zeigen einen Ausschnitt von einem Schwingungsdämpfer 1 in der Bauform eines Federbeins. Der Schwingungsdämpfer umfasst einen Zylinder 3, in dem eine Kolbenstange 5 axial beweglich angeordnet ist. Die Funktionsweise eines Schwingungsdämpfers wird als bekannt vorausgesetzt. An dem Zylinder ist ein Federteller 7 für eine Fahrzeugtragfeder 9 befestigt, die sich an einem zweiten Federteller 11 abstützt. Der zweite Federteller ist Bestandteil einer Lagerung 13, die an einem nicht dargestellten Fahrzeug befestigt wird. Die Lagerung verfügt über ein schräggestelltes Gleit- oder Rollenlager 15, das sich an einem Lagergrundkörper 17 abstützt. Der Lagergrundkörper kammert mit einem Träger 19 ein Elastomerelement, das wiederum mit der Kolbenstange 5 in Wirkverbindung steht. Alle auf den Schwingungsdämpfer 1 einwirkenden Kräfte werden von dem Träger 19 auf das Fahrzeug übertragen. Der Träger 19 verfügt über eine Anzahl von Verbindungsmitteln 20 , die z. B. als Durchgangsöffnung oder als Gewindezapfen ausgeführt sind.

An dem Träger 19 ist eine Lagerkappe 21 formschlüssig befestigt. Sie kann, wenn genügend Bauraum im Fahrzeug zu Verfügung steht, als Abdeckung des oberen Kolbenstangenendes benutzt werden.

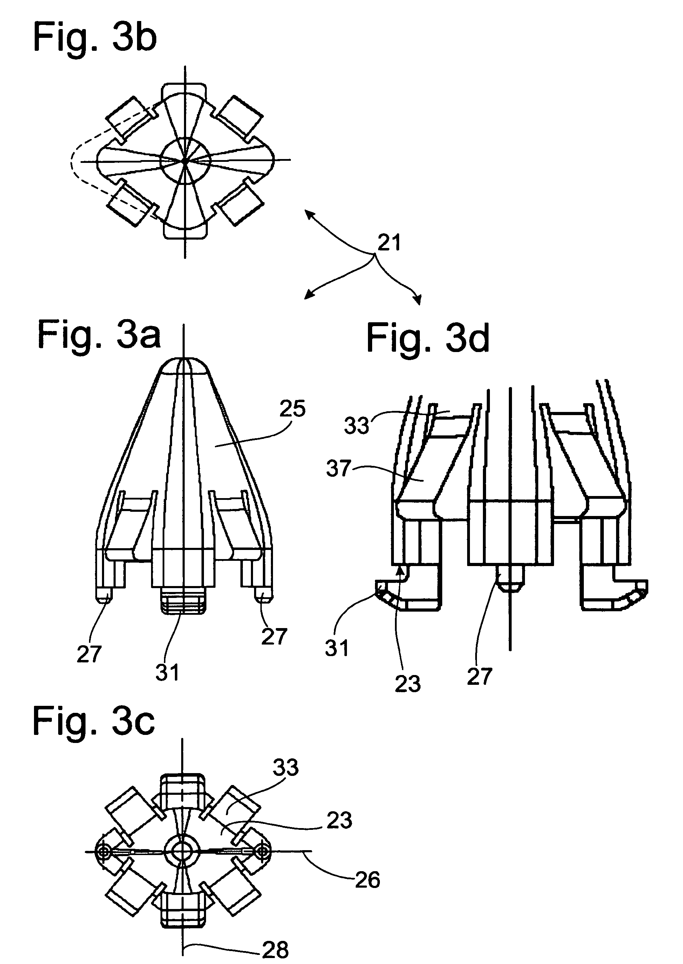

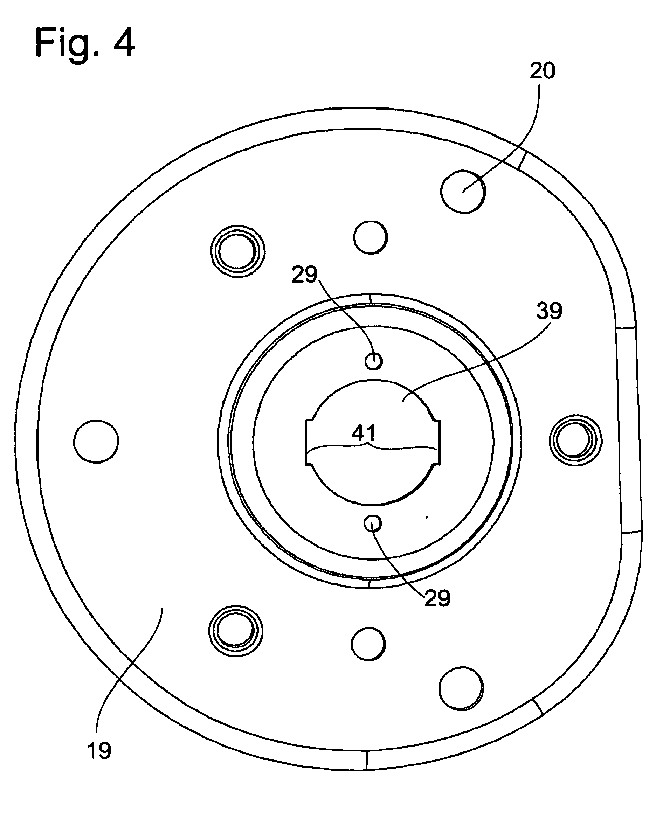

Die in den Figuren 3a bis 3d detailliert dargestellte Lagerkappe 21 weist ausgehend von einer rautenförmigen Grundfläche 23 eine kegelstumpfartige Kontur auf, deren Mantel als Verdrehflächen 25 ausgeführt sind. In diesem Ausführungsbeispiel verfügt die Lagerkappe über zwei Symmetrieachse 26, 28, wobei die Hauptachse 26 länger ausgeführt ist als die Hauptachse 28. Dadurch kann die Lagerkappe nur zwei um 180° versetzte Einbaulagen einnehmen. Man kann auch eine drachenförmige Grundfläche mit maximal einer Symmetrieachse verwenden, bei der nur eine einzige Einbaulage der Lagerkappe 21 möglich ist, wie mit der gestrichelten Darstellung in Fig. 3b verdeutlicht werden soll. An der Grundfläche 23 sind mindestens zwei Zapfen 27 als Verdrehsicherung ausgeführt, die in zwei Öffnungen 29 (s. Fig. 4) eingreifen. Des weiteren erstrecken sich von der Grundfläche in Axialrichtung mindestens zwei Schnapphaken 31, die mit dem Träger 19 des Schwingungsdämpfers 1 eine Formschlussverbindung bilden. Die Schnapphaken 31 sind räumlich unabhängig von den Zapfen 27 ausgeführt, so dass bei den Schnapphaken einfacher eine größere radiale Elastizität erreichbar ist.

In den Fig. 3a und 3d sind radial elastischen Zungen 33 erkennbar, die in den Bereichen der Verdrehflächen 25 durch Längsschnitte radial getrennt ausgeführt sind. Die Zungen stellen Haltemittel mit Halteflächen 35 dar, die einem definierten axialen Abstand zur Grundfläche 23 einnehmen. Auf der Oberseite der Zunge ist eine Formschräge 37 ausgeformt.

Bei der Montage der Lagerung 13 wird die Lagerkappe 21 mit ihrer Grundfläche 23 auf den Träger 19 aufgepresst. Der Träger verfügt über eine Durchgangsöffnung 39 zur Aufnahme des Kolbenstangenendes, das von der Lagerkappe abgedeckt wird. In der Durchgangsöffnung können Aussparungen 41 ausgeführt sein, durch die die Schnapphaken 31 leichter montierbar sind (s. Fig. 4). In der Figur 1 ist erkennbar, dass die Lagerkappe 21 montiert ist und die Schnapphaken 31 den Träger 19 untergreifen. Der Träger 19 ist mit einer Kröpfung 43 versehen, die die Bauhöhe der Schnapphaken 31 aufnimmt. Mit der Fig. 2 soll zusätzlich verdeutlicht werden, dass die Halteflächen 35 an der Unterseite der Zungen 33 nicht auf der Oberseite des Trägers 19 aufsitzen.

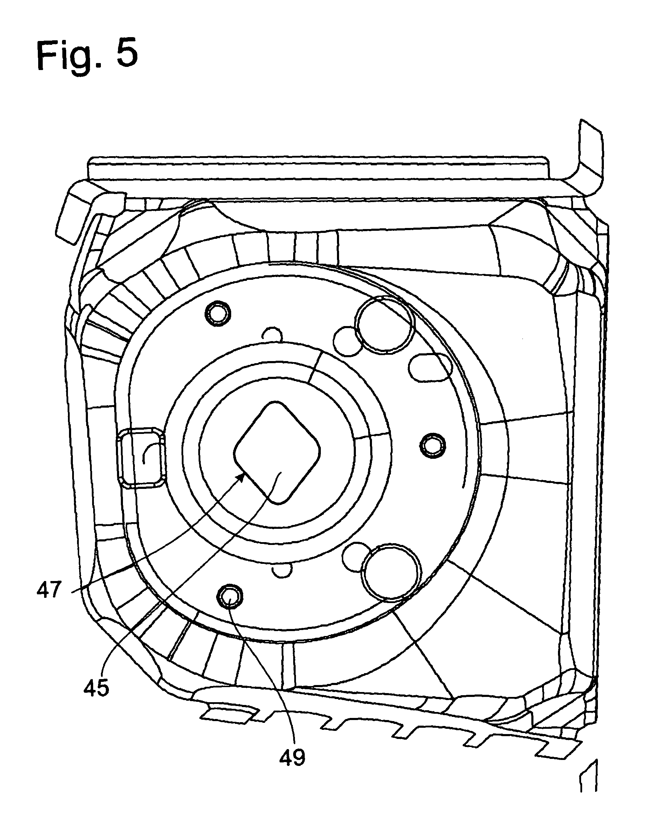

Die Figur 5 beschränkt sich auf einen Ausschnitt des Fahrzeugs im Bereich der Lagerung. Das Fahrzeug verfügt über eine Aufnahmeöffnung 45, deren Querschnitt der Grundfläche 23 der Lagerkappe 21 angepasst ist. Die Seitenkanten der Aufnahmeöffnung 45 stellen Gegenflächen 47 zu den Verdrehflächen der 25 der Lagerkappe 21 dar. In dem Fahrzeug sind ebenfalls Verbindungsmittel, bevorzugt Öffnungen 49, vorgesehen, die mit den Verbindungsmitteln 20 im Träger 19 in nur einer Winkelposition in Überdeckung bringbar sind.

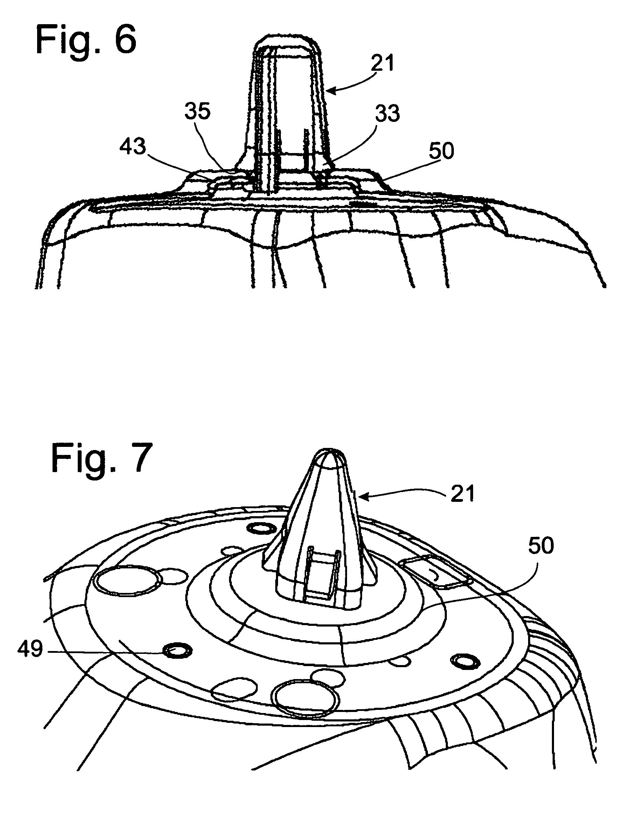

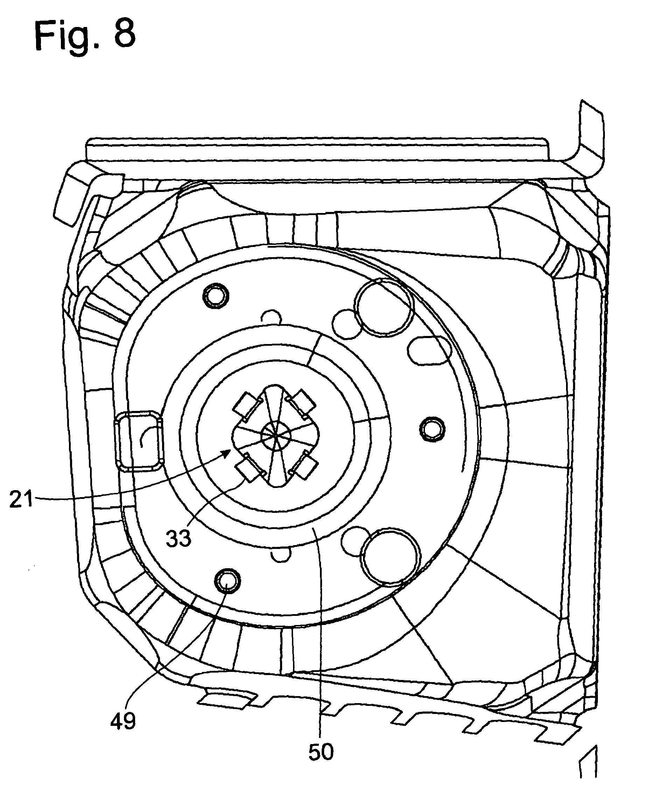

Wenn der Schwingungsdämpfer mit seiner Lagerung 13 von der Unterseite in das Fahrzeug eingebaut wird, dann durchgreift die Lagerkappe die Aufnahmeöffnung 45. Dabei können sich die Verdrehflächen 25 und die Gegenflächen 47 am Fahrzeug berühren und die Lagerung 13 rotatorisch ausrichten, wobei dann die jeweiligen Verbindungsmittel 20, 49 in Überdeckung kommen. Die Formschrägen 37 (Fig. 3d) sorgen dafür, dass die radial elastischen Zungen 33 der Lagerkappe 21 nach innen gedrückt werden. In einer Montagezwischenstellung können sich die Zungen radial entspannen und die Halteflächen 35 der Zungen 33 kommen auf der Oberseite des Fahrzeugs zur Anlage. (Fig. 6 bis 8). Dabei verklammern die Schnapphaken 31 und die Zungen 33 der Lagerkappe 21 den Schwingungsdämpfer 1 mit dem Fahrzeug. Auch ohne montierte Verbindungsmittel kann der Schwingungsdämpfer nicht nach unten aus dem Fahrzeug herausfallen. Die fahrzeugseitige Lagerung weist eine topfförmige Aufnahme 50 für die Kröpfung 43 der schwingungsdämpferseitigen Lagerung 13 auf. Damit können auch in der Montagezwischenstellung schon größere Querkräfte aufgenommen werden.

## Patentansprüche

1. Lagerung (13) für einen Schwingungsdämpfer (1), umfassend mindestens eine schwingungsdämpferseitige Verdrehfläche (25), die mit einer fahrzeugseitigen Gegenfläche (47) zumindest während des Montageablaufs des Schwingungsdämpfers (1) in einer Aufnahmeöffnung (45) des Fahrzeugs in Wirkverbindung steht,
wobei die Lagerung (13) über die mindestens eine Verdrehfläche (25) und die Gegenfläche (47) für eine Montagezwischenstellung, bei der lagerseitige Verbindungsmittel (20) zu fahrzeugseitigen Verbindungsmitteln (49) in Überdeckung gebracht sind, rotatorisch ausgerichtet ist, wobei die Lagerung (13) eine Lagerkappe (21) aufweist, die die mindestens eine Verdrehfläche (25) aufweist, und die Lagerkappe (21) drehmomentübertragend in Wirkverbindung mit der gesamten Lagerung (13) steht,
**dadurch gekennzeichnet, dass** die Lagerkappe (21) der Lagerung (13) Haltemittel (35) aufweist, die den Schwingungsdämpfer (1) unabhängig von den Verbindungsmitteln (20; 49) gegen Herausfallen aus dem Fahrzeug sichern, wobei die Haltemittel (35) erst nach der rotatorischen Ausrichtung der Lagerung (13) durch die Verdrehflächen (25) in der definierten Montagezwischenstellung auf einer Oberseite des Fahrzeugs zu Anlage kommen.

2. Lagerung nach Anspruch 1,
**dadurch gekennzeichnet,**
**dass** die Haltemittel von Halteflächen (35) gebildet werden, die sich fahrzeugseitig abstützen.

3. Lagerung nach Anspruch 1,
**dadurch gekennzeichnet,**
**dass** die Haltemittel -(35) von mindestens einer elastischen Zunge (33) bereitgestellt werden, die bei der Montage durch eine fahrzeugseitige Aufnahmeöffnung (45) geführt wird und sich nach der Montage radial entspannen kann.

4. Lagerung nach Anspruch 1,
**dadurch gekennzeichnet,**
**dass** die Haltemittel von der Lagerkappe (21) gebildet werden und die Lagerkappe (21) in Richtung der Längsachse des Schwingungsdämpfers (1) mit diesem fixiert ist.

5. Lagerung nach Anspruch 4,
**dadurch gekennzeichnet,**
**dass** die Fixierung der Lagerkappe (21) mit dem Schwingungsdämpfer (1) über mindestens eine Formschlussverbindung erfolgt.

6. Lagerung nach Anspruch 5,
**dadurch gekennzeichnet,**
**dass** die Formschlussverbindung von mindestens einem Schnapphaken (31) gebildet wird, der in einen Träger (19) der schwingungsdämpferseitigen Lagerung (13) eingreift.

7. Lagerung nach Anspruch 5,
**dadurch gekennzeichnet,**
**dass** die Formschlussverbindung unabhängig von der Verdrehsicherung (27; 29) der Lagerkappe (21) zur schwingungsdämpferseitigen Lagerung (13) ausgeführt ist.

8. Lagerung nach Anspruch 3,
**dadurch gekennzeichnet,**
**dass** die elastische Zunge (33) im Bereich der Verdrehfläche (25) angeordnet ist.

9. Lagerung nach Anspruch 4,
**dadurch gekennzeichnet,**
**dass** die Lagerkappe (21) hinsichtlich ihrer Anordnung der Verdrehflächen (25) maximal eine Symmetrieachse aufweist.

10. Lagerung nach Anspruch 4,
**dadurch gekennzeichnet,**
**dass** die Hauptachsen (26; 28) der Lagerkappe eine unterschiedliche Länge aufweisen.

11. Lagerung nach Anspruch 6,
**dadurch gekennzeichnet,**
**dass** der Träger (19) der schwingungsdämpferseitigen Lagerung (13) mit einer Kröpfung (43) versehen ist, die die Bauhöhe der Schnapphaken (31) aufnimmt.

12. Lagerung nach Anspruch 11,
**dadurch gekennzeichnet,**
**dass** die fahrzeugseitige Lagerung eine topfförmige Aufnahme (50) für die Kröpfung (43) der schwingungsdämpferseitigen Lagerung (13) aufweist.

13. Lagerung nach Anspruch 1,
**dadurch gekennzeichnet,**
**dass** der Träger (19) der schwingungsdämpferseitige Lagerung (13) die Haltemittel (51) aufweist, die mit dem Fahrzeug zusammenwirken.

## Claims

1. Mounting (13) for a vibration damper (1), comprising at least one vibration damper-side rotary surface (25) which is operatively connected to a vehicle-side countersurface (47) at least during the process of mounting the vibration damper (1) in a reception orifice (45) of the vehicle, the mounting (13) being orientated rotationally, via the at least one rotary surface (25) and the countersurface (47), for an intermediate mounting position in which bearing-side connection means (20) are brought into overlap with vehicle-side connection means (49), the mounting (13) having a bearing cap (21) which has the at least one rotary surface (25), and the bearing cap (21) being operatively connected in a torque-transmitting manner to the entire mounting (13), **characterized in that** the bearing cap (21) of the mounting (13) has holding means (35) which secure the vibration damper (1), independently of the connection means (20; 49), against falling out of the vehicle, the holding means (35) coming to bear on a top side of the vehicle only after the rotational orientation of the mounting (13) by means of the rotary surfaces (25) in the defined intermediate mounting position.

2. Mounting according to Claim 1, **characterized in that** the holding means are formed by holding surfaces (35) which are supported on the vehicle side.

3. Mounting according to Claim 1, **characterized in that** the holding means (35) are provided by at least one elastic tongue (33) which, during mounting, is led through a vehicle-side reception orifice (45) and which can relax radially after mounting.

4. Mounting according to Claim 1, **characterized in that** the holding means are formed by the bearing cap (21), and the bearing cap (21) is fixed to the vibration damper (1) in the direction of the longitudinal axis of the latter.

5. Mounting according to Claim 4, **characterized in that** the fixing of the bearing cap (21) to the vibration damper (1) takes place via at least one positive connection.

6. Mounting according to Claim 5, **characterized in that** the positive connection is formed by at least one snap hook (31) which engages into a carrier (19) of the vibration damper-side mounting (13).

7. Mounting according to Claim 5, **characterized in that** the positive connection is executed independently of the securing (27; 29) of the bearing cap (21) against rotation with respect to the vibration damper-side mounting (13).

8. Mounting according to Claim 3, **characterized in that** the elastic tongue (33) is arranged in the region of the rotary surface (25).

9. Mounting according to Claim 4, **characterized in that** the bearing cap (21) has at most one axis of symmetry in respect of its arrangement of the rotary surfaces (25).

10. Mounting according to Claim 4, **characterized in that** the major axes (26; 28) of the bearing cap have a different length.

11. Mounting according to Claim 6, **characterized in that** the carrier (19) of the vibration damper-side mounting (13) is provided with a bend (43) which receives the overall height of the snap hooks (31).

12. Mounting according to Claim 11, **characterized in that** the vehicle-side mounting has a pot-shaped receptacle (50) for the bend (43) of the vibration damper-side mounting (13).

13. Mounting according to Claim 1, **characterized in that** the carrier (19) of the vibration damper-side mounting (13) has the holding means (51) which cooperate with the vehicle.

## Revendications

1. Palier (13) pour un amortisseur de vibrations (1), comprenant au moins une surface de rotation (25) du côté de l'amortisseur de vibrations, laquelle est en liaison fonctionnelle avec une surface conjuguée (47) du côté du véhicule au moins pendant le montage de l'amortisseur de vibrations (1) dans une ouverture de réception (45) du véhicule, le palier (13) étant orienté en rotation par le biais de l'au moins une surface de rotation (25) et de la surface conjuguée (47) pour une position de montage intermédiaire, dans laquelle des moyens de connexion du côté du palier (20) à des moyens de connexion (49) du côté du véhicule sont amenés en coïncidence, le palier (13) présentant un capuchon de palier (21), qui présente l'au moins une surface de rotation (25) , et le capuchon de palier (21) étant en liaison fonctionnelle par transfert de couple avec le palier (13) dans son ensemble, **caractérisé en ce que** le capuchon de palier (21) du palier (13) présente des moyens de retenue (35), qui empêchent l'amortisseur de vibrations (1) de tomber du véhicule indépendamment des moyens de connexion (20 ; 49), les moyens de retenue (35) venant en appui initialement après l'orientation en rotation du palier (13), par les surfaces de rotation (25) dans la position intermédiaire de montage définie sur un côté supérieur du véhicule.

2. Palier selon la revendication 1,
**caractérisé en ce que**
les moyens de retenue sont formés par des surfaces de retenue (35) qui s'appuient du côté du véhicule.

3. Palier selon la revendication 1,
**caractérisé en ce que**
les moyens de retenue (35) sont réalisés par au moins une langue élastique (33), qui est guidée lors du montage à travers une ouverture de réception (45) du côté du véhicule et qui peut se détendre radialement après le montage.

4. Palier selon la revendication 1,
**caractérisé en ce que**
les moyens de retenue sont formés par le capuchon de palier (21) et le capuchon de palier (21) est fixé dans la direction de l'axe longitudinal de l'amortisseur de vibrations (1) avec ce dernier.

5. Palier selon la revendication 4,
**caractérisé en ce que**
la fixation du capuchon de palier (21) avec l'amortisseur de vibrations (1) s'effectue par le biais d'au moins une connexion par engagement par coopération de forme.

6. Palier selon la revendication 5,
**caractérisé en ce que**
la connexion par engagement par coopération de forme est formée par au moins un crochet d'encliquetage (31) qui vient en prise dans un support (19) avec le palier du côté de l'amortisseur de vibrations (13).

7. Palier selon la revendication 5,
**caractérisé en ce que**
la connexion par engagement par coopération de forme est réalisée indépendamment de la fixation en rotation (27 ; 29) du capuchon de palier (21) au palier du côté de l'amortisseur de vibrations (13).

8. Palier selon la revendication 3,
**caractérisé en ce que**
la langue élastique (33) est disposée dans la région de la surface de rotation (25).

9. Palier selon la revendication 4,
**caractérisé en ce que**
le capuchon de palier (21) présente au maximum un axe de symétrie par rapport à l'agencement de ses surfaces de rotation (25).

10. Palier selon la revendication 4,
**caractérisé en ce que**
les axes principaux (26 ; 28) du capuchon de palier présentent une longueur différente.

11. Palier selon la revendication 6,
**caractérisé en ce que**
le support (19) du palier du côté de l'amortisseur de vibrations (13) est pourvu d'un coudage (43), qui reçoit la hauteur constructive des crochets d'encliquetage (31).

12. Palier selon la revendication 11,
**caractérisé en ce que**
le palier du côté du véhicule présente un logement en forme de pot (50) pour le coudage (43) du palier du côté de l'amortisseur de vibrations (13).

13. Palier selon la revendication 1,
**caractérisé en ce que**
le support (19) du palier du côté de l'amortisseur de vibrations (13) présente les moyens de retenue (51) qui coopèrent avec le véhicule.
